# FASCICULE DE BREVET EUROPEEN

(11) **EP 0 652 550 B1**
(45) Date de publication et mention de la délivrance du brevet: **28.04.1999**
(21) Numéro de dépôt: 94402504.8
(22) Date de dépôt: 07.11.1994
(51) Int. Cl.: G11B 5/39

(54) **Tête magnétique de lecture à élément magnétorésistant multicouche et à concentrateur et son procédé de réalisation**
Lesemagnetkopf mit Mehrschichtmagnetowiderstandselement und Konzentrator und Herstellungsverfahren
Read-out magnetic head with multilayer magnetoresistant element and concentrator and manufacturing method

(30) Priorité: 08.11.1993 FR 9313249
(43) Date de publication de la demande: 10.05.1995
(73) Titulaire: COMMISSARIAT A L'ENERGIE ATOMIQUE, 75015 Paris (FR); SILMAG S.A., 38054 Grenoble Cédex 9 (FR)
(72) Inventeur: Lazzari, Jean-Pierre, F-38700 Corenc (FR); Mouchot, Jean, F-38000 Grenoble (FR)
(74) Mandataire: Signore, Robert

(56) Documents cités:
- EP-A- 0 221 540
- EP-A- 0 472 187
- EP-A- 0 560 350
- WO-A-93/08562
- US-A- 4 356 523
- PATENT ABSTRACTS OF JAPAN vol. 6, no. 22 (P-101) (900) 9 Février 1982 & JP-A-56 143 514 (FUJITSU K. K.) 9 Novembre 1981
- PATENT ABSTRACTS OF JAPAN vol. 14, no. 353 (P-1086) (4296) 31 Juillet 1990 & JP-A-02 128 313 (MATSUSHITA ELECTRIC IND CO LTD) 16 Mai 1990
- PATENT ABSTRACTS OF JAPAN vol. 11, no. 358 (P-639) 21 Novembre 1987 & JP-A-62 134 814 (SONY CORP) 17 Juin 1987

## Description

### Domaine technique

La présente invention a pour objet une tête magnétique de lecture à élément magnétorésistant multicouche et à concentrateur et son procédé de réalisation. Elle trouve une application dans l'enregistrement magnétique d'informations.

### Etat de la technique

Les têtes magnétiques de lecture à élément magnétorésistant sont connues. Pour certaines, l'élément magnétorésistant est placé sous l'entrefer. C'est ce qui est décrit, par exemple, dans les documents FR-A-2 645 314 et FR-A-2 657 189. Pour d'autres, l'élément magnétorésistant est placé à l'arrière du circuit magnétique et sert à fermer celui-ci. C'est ce qui est décrit, par exemple, dans les documents EP-A-0 472 187 et EP-A-0 475 397.

EP-A-0 472 187 décrit une tête magnétique telle que définie dans le préambule de la revendication 1.

Les têtes utilisant un élément magnétorésistant fermant le circuit magnétique à l'arrière de la tête fonctionnent avec des matériaux magnétiques monolithiques. Il s'agit principalement de composés à base de fer et de nickel, ou de composés à base de fer, de nickel et de cobalt. Or, avec de tels matériaux, si l'on utilise l'élément magnétorésistant en position longitudinale, la sensibilité est faible car le champ magnétique de lecture se trouve être parallèle au courant de détection circulant dans l'élément. On peut améliorer cette sensibilité en faisant travailler l'élément transversalement, c'est-à-dire en le tournant de 90° pour que le champ magnétique de lecture traverse l'élément dans le sens de la largeur, le courant de détection étant toujours appliqué dans le sens de la longueur. Mais cette disposition conduit à des difficultés de réalisation.

La présente invention a justement pour but de remédier à ces inconvénients.

### Exposé de l'invention

A cette fin, l'invention préconise d'abord d'utiliser, pour constituer l'élément magnétorésistant, un matériau non plus monolithique mais multicouche. Il s'agit de matériaux constitués d'un empilement de couches magnétiques séparées par des couches métalliques non magnétiques.

Les structures magnétiques multicouches utilisent le cobalt, le fer, le cuivre, le chrome, le nickel, les alliages de fer et de nickel, l'argent, l'or, le molybdène, le ruthénium et le manganèse, comme décrit dans l'article de H. YAMAMOTO et T. SHINJO, publié dans la revue "IEEE Translation Journal on Magnetics in Japan", vol. 7, n° 9, septembre 1992, sous le titre "Magnetoresistance of Multilayers", p. 674-684).

Les matériaux multicouches présentent des propriétés intéressantes : large effet magnétorésistif, faible champ à saturation, faible coercitivité, bonne tenue au recuit. Les meilleures structures obtenues à ce jour sont constituées de couches de FeNi séparées par des couches de cuivre comme décrit dans l'article de S.S.P. PARKIN intitulé "Oscillations in Giant Magnetoresistance and Antiferromagnetic Coupling in [ Ni₈₁Fe₁₉/Cu]_{N} N Multilayers", publié dans la revue "Appl. Phys. Lett." 60, n° 4, janvier 1992, p. 512-514 et l'article de R. NAKATANI et al. publié dans la revue "IEEE Transactions on Magnetics", vol. 28, n° 5, septembre 1992, p. 2668-2670 et intitulé "Giant Magnetoresistance in Ni-Fe/Cu Multilayers Formed by Ion Beam Sputtering".

Donnent également de bons résultats les structures formées de couches minces de FeNi séparées par des couches d'argent, comme décrit dans l'article de B. RODMACQ et al., publié dans "Journal of Magnetism and Magnetic Materials" 118, 1993, p. L11-L16 et intitulé "Magnetoresistive Properties and Thermal Stability of Ni-Fe/Ag Multilayers".

Ces nouveaux matériaux ont la propriété d'être fortement magnétorésistifs, c'est-à-dire d'avoir un rapport de variation relative de résistivité allant de 10 à 20%, et de présenter des champs magnétiques à saturation faibles, inférieurs à 40kA/m.

Avec les matériaux de type multicouche, on obtient une grande sensibilité au flux lorsque le champ magnétique est appliqué dans le sens longitudinal. A coefficient de magnétorésistance constant, la sensibilité est maximum quand un champ dit de saturation est faible. Le champ à saturation correspond au champ magnétique qu'il faut appliquer pour orienter, dans une même direction et dans un même sens, l'aimantation de chacune des différentes couches magnétiques.

En champ parallèle à la longueur d'un barreau d'un matériau multicouche, ce champ est égal au champ de couplage des couches unitaires. En champ transverse, l'apparition de champs démagnétisants augmente le champ à saturation, ce qui réduit la sensibilité.

En d'autres termes, il est préférable, du point de vue de la sensibilité, de placer l'élément magnétorésistant en position longitudinale, c'est-à-dire avec sa grande dimension parallèle au champ magnétique à lire.

A côté de cette première caractéristique de l'invention, liée à l'utilisation de matériaux multicouches en position longitudinale, l'invention en préconise une seconde, qui est d'utiliser un concentrateur de champ magnétique formé de deux couches magnétiques définissant un second entrefer, en travers duquel se trouve l'élément magnétorésistant. De cette manière, on réalise une concentration du champ magnétique de lecture dans l'élément magnétorésistant, ce qui augmente le signal de mesure.

De façon précise, la présente invention a donc pour objet une tête magnétique de lecture comprenant un circuit magnétique avec deux pièces polaires séparées par un premier entrefer et un élément magnétorésistant longitudinal, cette tête étant caractérisée par le fait qu'elle comprend en outre deux couches magnétiques en contact avec les pièces polaires et écartées l'une de l'autre par un second entrefer disposé sous le premier, ces couches magnétiques ayant une largeur qui s'amenuise lorsqu'on s'approche du second entrefer et réalisant ainsi un concentrateur de champ magnétique, l'élément magnétorésistant longitudinal étant disposé en travers de ce second entrefer et étant réalisé en un matériau multicouche constitué d'un empilement de couches magnétiques séparées par des couches métalliques non magnétiques.

Dans un mode de réalisation avantageux, l'élément magnétorésistant est formé de plusieurs tronçons longitudinaux parallèles disposés côte à côte en travers du second entrefer, ces tronçons étant connectés électriquement en série par leurs extrémités par des tronçons transversaux.

La tête de lecture peut comprendre en outre un conducteur électrique apte à polariser longitudinalement l'élément magnétorésistant.

La tête de lecture de l'invention peut être aisément complétée par des moyens aptes à la faire travailler également en écriture. Ces moyens consistent en une pièce polaire inférieure et en un bobinage conducteur.

La présente invention a également pour objet un procédé de réalisation de la tête qui vient d'être définie.

### Brève description des dessins

- la figure 1 montre un sous-ensemble relatif à des moyens d'écriture ;
- la figure 2 montre, en coupe, la réalisation d'un concentrateur ;
- la figure 3 montre le concentrateur en vue de dessus ;
- la figure 4 illustre une étape intermédiaire de dépôt d'une couche isolante ;
- la figure 5 montre, en vue de dessus, des plots de connexion ;
- la figure 6 montre un élément magnétorésistant en coupe ;
- la figure 7 montre un élément magnétorésistant en vue de dessus ;
- la figure 8 illustre une étape intermédiaire de dépôt d'une nouvelle couche d'isolant ;
- la figure 9 montre la formation d'ouvertures dans la couche isolante ;
- la figure 10 montre des plots conducteurs et un élément conducteur de polarisation ;
- la figure 11 montre la tête de lecture-écriture finalement obtenue.

### Exposé détaillé d'un mode de réalisation

Les caractéristiques de la tête de lecture de l'invention apparaîtront à travers les étapes successives de son procédé de réalisation.

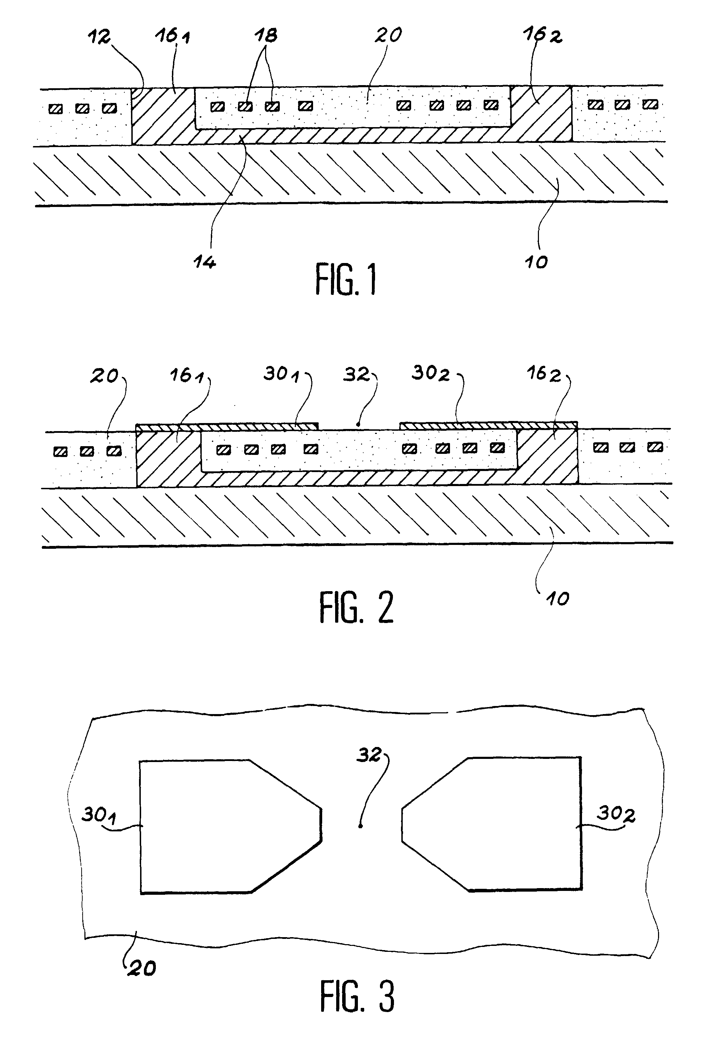

Si l'on veut obtenir seulement une tête de lecture, on partira d'un substrat simple, formé par exemple d'une plaquette de silicium. Si l'on veut obtenir une tête de lecture capable de travailler également en écriture, on partira d'un sous-ensemble qui est illustré sur la figure 1.

Ce sous-ensemble est obtenu par des opérations à la portée de l'homme de métier et qui sont décrites, par exemple, dans le document FR-A-2 645 314 (ou son correspondant américain US-A-5,208,716). Elles ne seront donc pas détaillées ici. Il suffit d'indiquer qu'on réalise, sur un substrat semiconducteur 10, par exemple en silicium, un caisson 12, dans lequel on dépose une couche magnétique inférieure 14 et deux piliers magnétiques 16₁, 16₂.

On réalise ensuite un bobinage conducteur 18 s'enroulant autour des piliers 16₁, 16₂. Ce bobinage peut être en cuivre. Seuls quelques tours sont illustrés sur la figure 1, mais il faut comprendre que, dans la pratique, on peut avoir, par exemple, 16 tours dans un même plan, répartis en deux fois 8 tours. Ce bobinage est enterré dans une couche isolante 20.

Les opérations propres à la réalisation de la partie lecture commencent alors à partir du sous-ensemble de la figure 1 pris comme substrat.

On commence par déposer une couche de matériau magnétique et on grave cette couche pour former deux pièces 30₁, 30₂ écartées l'une de l'autre par un entrefer 32 (fig. 2 et 3). Ces couches ont une largeur qui s'amenuise lorsqu'on s'approche de l'entrefer 32.

Sur la figure 3, on voit ainsi des couches 30₁, 30₂, qui ont une forme trapézoïdale mais toute autre forme est possible dès lors que la fonction de concentration du flux magnétique est remplie. Le matériau utilisé pour réaliser ce concentrateur peut être du fer-nickel.

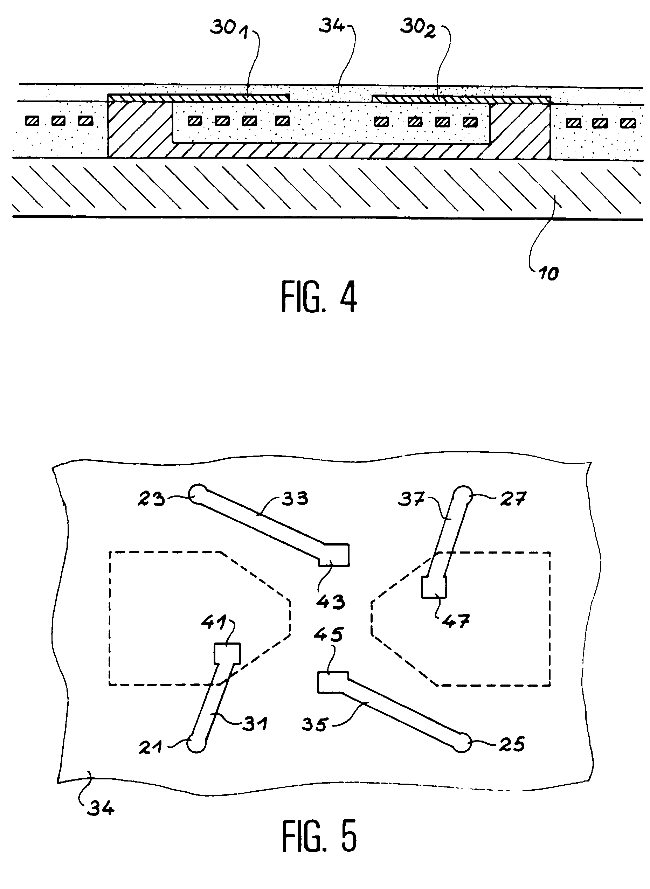

On dépose ensuite, sur l'ensemble, une première couche isolante 34, par exemple en silice, de 0,1 à 0,5 µm d'épaisseur (Fig. 4).

On dépose ensuite une couche de matériau conducteur, de préférence en matériau réfractaire comme le titane, le tungstène ou le molybdène. L'épaisseur de cette couche peut aller de 0,05 à 0,5 µm. On pratique ensuite, sur cette couche métallique, une photolithogravure, afin de réaliser des plots extérieurs 21, 23, 25, 27, des plots intérieurs 41, 43, 45, 47 et des bandes conductrices 31, 33, 35, 37 reliant les plots intérieurs aux plots extérieurs (fig. 5).

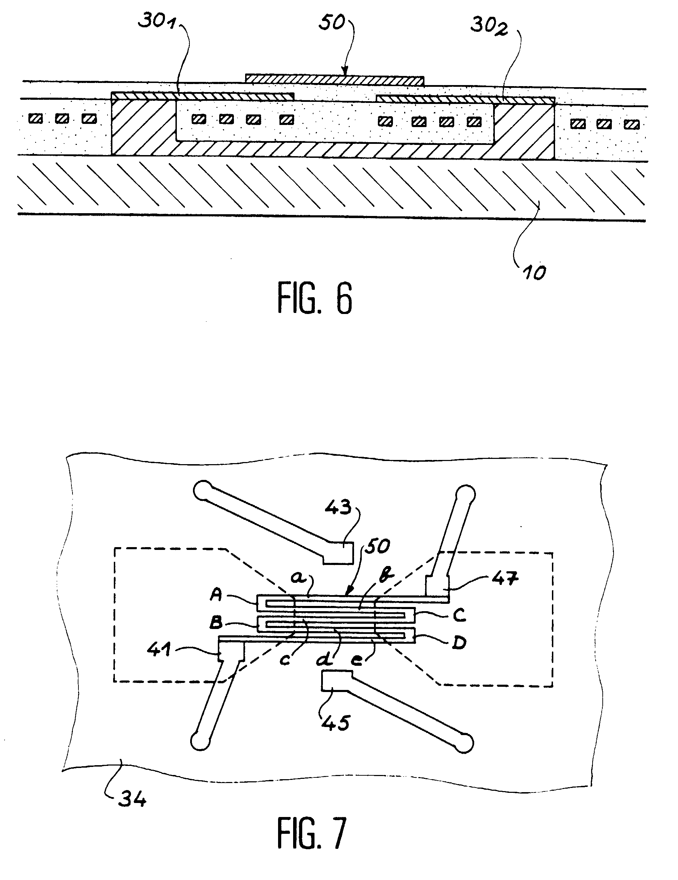

On procède ensuite à la réalisation de l'élément magnétorésistant. Pour cela, on dépose une couche de matériau magnétorésistant de type multicouche et l'on grave cette couche pour constituer un élément magnétorésistant 50 (Fig. 6). Le matériau magnétorésistant multicouche peut être, par exemple, en Ag/FeNi.

Dans le mode de réalisation illustré sur la figure 7, l'élément magnétorésistant 50 possède des tronçons longitudinaux parallèles (a, b, c, d, e) disposés côte à côte en travers de l'entrefer 32 et des tronçons transversaux (A, B, C, D) reliant les extrémités des tronçons longitudinaux. L'élément magnétorésistant est relié aux plots 41 et 47.

Les tronçons longitudinaux débordent de chaque côté de l'entrefer 32 et chevauchent les deux pièces du concentrateur d'environ 2 µm. Par exemple, si l'entrefer 32 présente une longueur de 4 µm, la longueur des bandes longitudinales sera d'environ 8 µm.

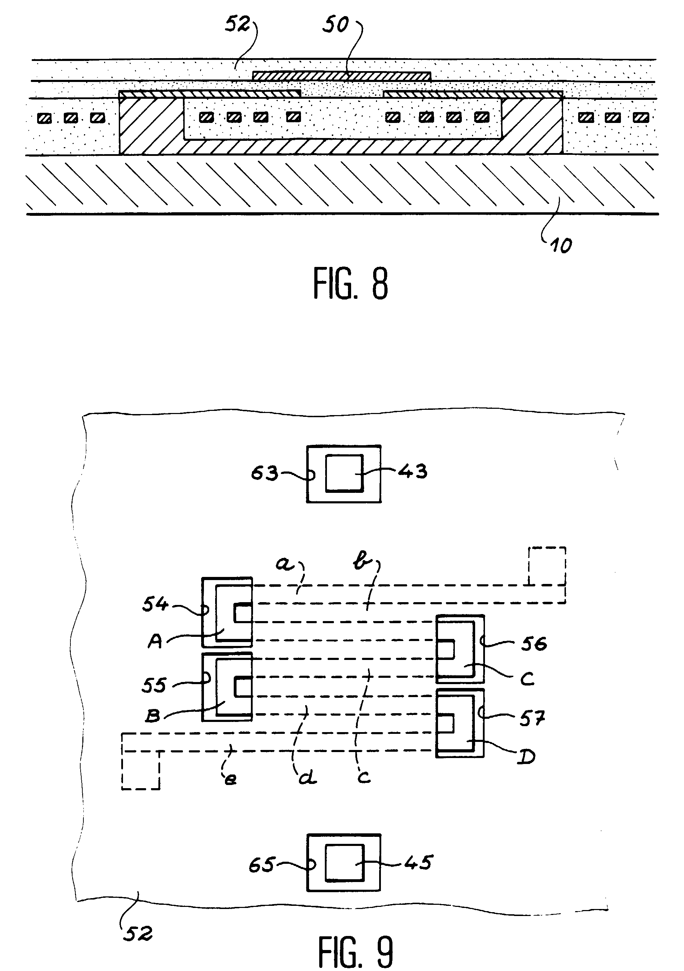

On dépose ensuite sur l'ensemble une nouvelle couche isolante 52, par exemple en silice (fig. 8). Par photolithogravure, on ouvre deux ouvertues 63, 65 pour dégager des plots 43, 45 qui serviront à connecter le conducteur de polarisation.

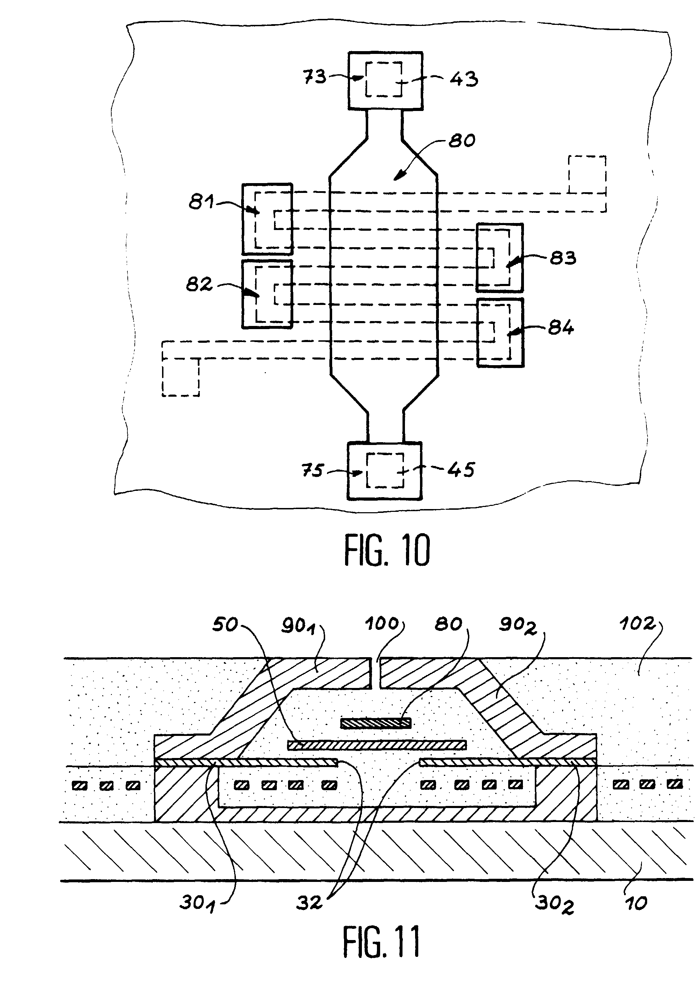

Dans cette opération, on peut dégager également les extrémités A, B, C et D de l'élément magnétorésistant par des ouvertures 54, 55, 56, 57 (fig. 9).

On dépose ensuite une nouvelle couche métallique, par exemple de même nature que la précédente, d'épaisseur assez faible, par exemple 0,5 µm, suivie d'une couche conductrice comme le cuivre par exemple. Par photolithogravure, on laisse subsister deux plots 73, 75 dans les ouvertures 63, 65 qui avaient été dégagées, et on réalise, entre ces deux extrémités, un ruban 80 qui va servir de conducteur de polarisation. Simultanément, on laisse subsister des plots 81, 82, 83, 84 dans les ouvertures 54, 55, 56, 57 qui avaient été ménagées aux extrémités de l'élément magnétorésistant. Ces plots court-circuitent les bras transversaux A, B, C, D de l'élément magnétorésistant. De cette manière, seuls les bras longitudinaux a, b, c, d, e sont actifs.

La réalisation de la tête se termine (fig. 11) par la réalisation de deux pièces polaires 90₁, 90₂ séparées par un entrefer 100, le tout noyé dans un isolant 102.

Les plots de connexion de l'élément magnétorésistant et du conducteur de polarisation ayant été rejetés à la périphérie du dispositif 21, 23, 25, 27, il n'y a pas de difficulté à établir des intraconnexions à travers la couche d'isolant 102.

Dans les exemples qui viennent d'être décrits, l'élément magnétorésistant 50 est placé au-dessus du second entrefer 32. Il va de soi qu'on ne sortirait pas du cadre de l'invention en le plaçant au dessous.

De même le conducteur de polarisation 80 pourrait être disposé sous l'élément magnétorésistant est non plus sur celui-ci.

## Revendications

1. Tête magnétique de lecture comprenant un circuit magnétique avec deux pièces polaires (90₁, 90₂) séparées par un premier entrefer (100) et un élément magnétorésistant longitudinal (50), caractérisée par le fait qu'elle comprend en outre deux couches magnétiques (30₁, 30₂) en contact avec les pièces polaires (90₁, 90₂)et écartées l'une de l'autre par un second entrefer (32) disposé sous le premier (100), ces couches magnétiques (30₁, 30₂) ayant une largeur qui s'amenuise lorsqu'on s'approche du second entrefer (32) et réalisant ainsi un concentrateur de champ magnétique, l'élément magnétorésistant longitudinal (50) étant disposé en travers de ce second entrefer (32) et étant réalisé en un matériau multicouche constitué d'un empilement de couches magnétiques séparées par des couches métalliques non magnétiques.

2. Tête magnétique de lecture selon la revendication 1, caractérisée par le fait que l'élément magnétorésistant (50) est replié sur lui-même et formé de plusieurs tronçons longitudinaux parallèles (a, b, c, d, e) disposés côte à côte en travers du second entrefer (32) et de tronçons transversaux (A, B, C, D).

3. Tête magnétique selon la revendication 2, caractérisée par le fait que les tronçons transversaux (A, B, C, D) sont court-circuités par des conducteurs (81, 82, 83, 84).

4. Tête magnétique selon la revendication 1, caractérisé par le fait qu'elle comprend en outre un conducteur électrique (80) apte à polariser longitudinalement l'élément magnétorésistant (50).

5. Tête magnétique de lecture selon la revendication 4, caractérisée par le fait que le matériau du conducteur de polarisation (80) est le même que le matériau des conducteurs (81, 82, 83, 84) court-circuitant les tronçons longitudinaux (a, b, c, d, e) de l'élément magnétorésistant (50).

6. Tête magnétique de lecture selon la revendication 1, caractérisée par le fait que l'élément magnétorésistant (50) possède deux extrémités reliées par deux bandes conductrices (31, 37) à deux plots extérieurs (21, 27).

7. Tête magnétique de lecture selon la revendication 4, caractérisée par le fait que le conducteur électrique de polarisation (80) possède deux extrémités reliées par deux bandes conductrices (33, 35) à deux plots extérieurs (23, 25).

8. Tête magnétique selon l'une quelconque des revendications 1 à 7, caractérisée par le fait qu'elle comprend en outre une pièce magnétique inférieure (14, 16₁, 16₂) magnétiquement couplée aux deux pièces polaires (90₁, 90₂) et un bobinage conducteur (18) entourant une partie (16₁, 16₂) du circuit magnétique, la tête fonctionnant ainsi aussi bien en lecture qu'en écriture.

9. Procédé de réalisation d'une tête magnétique de lecture selon la revendication 1, caractérisé par le fait qu'il comprend les opérations suivantes :
- sur un substrat (20, 16₁, 16₂) on dépose une couche de matériau magnétique et on grave cette couche pour former deux couches (30₁, 30₂) écartées l'une de l'autre par un entrefer (32), ces couches ayant une largeur qui s'amenuise lorsqu'on s'approche de l'entrefer (32),
- on dépose sur l'ensemble une première couche isolante (34),
- on dépose une couche métallique que l'on grave pour réaliser quatre plots conducteurs intérieurs (41, 43, 45, 47) reliés par quatre bandes conductrices (31, 33, 35, 37), à quatre plots extérieurs (21, 23, 25, 27),
- on dépose une couche de matériau magnétorésistant de type multicouche et l'on grave cette couche pour constituer un élément magnétorésistant, cet élément ayant deux extrémités en contact avec deux premiers plots intérieurs (41, 47),
- on dépose une deuxième couche isolante (52),
- on grave cette deuxième couche isolante (52) pour dégager deux autres plots intérieurs (43, 45),
- on dépose une couche conductrice que l'on grave pour laisser subsister un ruban (80) ayant deux extrémités (73, 75) en contact avec les dits deux autres plots intérieurs de contact (43, 45), ce ruban (80) s'étendant en travers de l'élément magnétorésistant (50),
- on forme sur l'ensemble deux pièces polaires (90₁, 90₂) prenant appui sur les deux couches magnétiques (30₁, 30₂), ces deux pièces polaires étant séparées par un entrefer (100).

10. Procédé selon la revendication 9, caractérisé par le fait que l'on réalise un élément magnétorésistant en forme de tronçons longitudinaux parallèles (a, b, c, d, e) disposés côte à côte en travers de l'entrefer (32) séparant les deux couches magnétiques (30₁, 30₂) et de tronçons transversaux (A, B, C, D) reliant les extrémités des tronçons longitudinaux.

11. Procédé selon la revendication 10, caractérisé par le fait que, dans l'opération de gravure de la deuxième couche isolante (52), on dégage non seulement les deux autres plots intérieurs (43, 45) mais aussi les tronçons transversaux (A, B, C, D) de l'élément magnétorésistant (50), de sorte que dans l'opération de dépôt de la couche conductrice on forme des conducteurs transversaux (81, 82, 83, 84) sur les tronçons transversaux (A, B, C, D) de l'élément magnétorésistant (50).

12. Procédé selon la revendication 9, caractérisé par le fait que l'on réalise au préalable un sous-ensemble en partant d'un substrat (10) sur lequel on forme une pièce polaire (14) avec deux piliers (16₁, 16₂) et un bobinage conducteur (18) noyé dans un isolant (20), ce sous-ensemble servant de substrat pour les opérations suivantes, ce procédé conduisant à une tête de lecture et d'écriture.

## Patentansprüche

1. Lesemagnetkopf, einen Magnetkreis mit zwei Polschuhen (90₁, 90₂), getrennt durch einen Spalt bzw. Luftspalt (100), und ein Magnetowiderstand-Längselement (50) umfassend,
**dadurch gekennzeichnet,**
daß er außerdem zwei magnetische Schichten (30₁, 30₂) umfaßt, in Kontakt mit den Polschuhen (90₁, 90₂) und voneinander beabstandet durch einen zweiten Spalt (32), angeordnet unter dem ersten (100), wobei die magnetischen Schichten (30₁, 30₂) eine Breite haben, die abnimmt, wenn man sich dem zweiten Spalt (32) nähert, wodurch sie einen Magnetfeldkonzentrator bilden, und das Magnetowiderstand-Längselement (50) quer zu diesem zweiten Spalt (32) angeordnet ist und aus einem Mehrschichtenmaterial hergestellt wird, gebildet durch einen Stapel aus magnetischen Schichten, getrennt durch unmagnetische metallische Schichten.

2. Lesemagnetkopf nach Anspruch 1, dadurch gekennzeichnet, daß das Magnetowiderstandselement (50) derart in sich selbst gebogen ist, daß es mehrere parallele Längsteilstücke (a, b, c, d, e), Seite an Seite quer zum zweiten Spalt (32) angeordnet, und Querteilstücke (A, B, C, D) bildet.

3. Lesemagnetkopf nach Anspruch 2, dadurch gekennzeichnet, daß die Querteilstücke (A, B, C, D) kurzgeschlossen werden durch Leiter (81, 82, 83, 84).

4. Lesemagnetkopf nach Anspruch 1, dadurch gekennzeichnet, daß er außerdem einen elektrischen Leiter (80) umfaßt, der ermöglicht, das Magnetowiderstand-Längselement (50) in Längsrichtung zu polen.

5. Lesemagnetkopf nach Anspruch 4, dadurch gekennzeichnet, daß das Material des Polungsleiters (80) dasselbe ist wie das Material der Leiter (81, 82, 83, 84), die die Längsteilstücke (a, b, c, d, e) des Magnetowiderstandselements (50) kurzschließen.

6. Lesemagnetkopf nach Anspruch 1, dadurch gekennzeichnet, daß das Magnetowiderstandselement (50) zwei Enden besitzt, die durch zwei leitende Streifen (31, 37) mit zwei Außenkontaktstellen (21, 27) verbunden sind.

7. Lesemagnetkopf nach Anspruch 4, dadurch gekennzeichnet, daß der elektrische Polungsleiter (80) zwei Enden besitzt, die durch zwei leitende Streifen (33, 35) mit zwei Außenkontaktstellen (23, 25) verbunden sind.

8. Lesemagnetkopf nach einem der Ansprüche 1 bis 7, dadurch gekennzeichnet, daß er außerdem ein unteres magnetisches Teil (14, 16₁, 16₂) umfaßt, magnetisch gekoppelt mit den beiden Polschuhen (90₁, 90₂), und eine leitende Spule (18), die einen Teil (16₁, 16₂) des Magnetkreises umgibt, womit der Kopf folglich sowohl lesen als auch schreiben kann.

9. Herstellungsverfahren eines Lesekopfs nach Anspruch 1, dadurch gekennzeichnet, daß es die folgenden Operationen umfaßt:
- Abscheiden einer Schicht aus magnetischem Material auf einem Substrat (20, 16₁, 16₂) und Ätzen dieser Schicht, um zwei durch einen Spalt (32) voneinander beabstandete Schichten (30₁, 30₂) zu bilden, wobei diese Schichten eine sich verringernde Breite haben, wenn man sich dem Spalt (32) nähert,
- Abscheiden einer ersten Isolierschicht (34) auf dem Ganzen,
- Abscheiden einer Metallschicht, die man ätzt, um vier leitende Innenkontaktstellen (41, 43, 45, 47) herzustellen, die durch vier leitende Streifen (31, 33, 35, 37) mit vier Außenkontaktstellen (21, 23, 25, 27) verbunden sind,
- Abscheiden einer Magnetowiderstandsmaterialschicht des Mehrschichtentyps und Ätzen dieser Schicht, um ein Magnetowiderstandselement zu bilden, wobei dieses Element durch zwei Enden in Kontakt ist mit zwei ersten Innenkontaktstellen (41, 47),
- Abscheiden einer zweiten Isolierschicht (52),
- Ätzen dieser zweiten Isolierschicht (52), um zwei weitere Innenkontaktstellen (43, 45) freizulegen,
- Abscheiden einer leitenden Schicht, die man ätzt bis auf einen Streifen (80) mit zwei Enden (73, 75) in Kontakt mit den beiden genannten anderen Innenkontaktstellen (43, 45), wobei dieser Streifen (80) sich quer zu dem Magnetowiderstandselement (50) erstreckt,
- Bilden von zwei Polschuhen (90₁, 90₂) auf dem Ganzen, die sich auf den beiden magnetischen Schichten (30₁, 30₂) abstützen, wobei diese beiden Polschuhe durch einen Spalt bzw. Luftspalt (100) getrennt werden.

10. Verfahren nach Anspruch 9, dadurch gekennzeichnet, daß man ein Magnetowiderstandselement in Form paralleler Teilstücke (a, b, c, d, e) herstellt, Seite an Seite angeordnet und quer zu dem die beiden magnetischen Schichten (30₁, 30₂) trennenden Spalt (32), und Querteilstücke (A, B, C, D), die die Enden der Längsteilstücke verbinden.

11. Verfahren nach Anspruch 10, dadurch gekennzeichnet, daß man bei der Ätzoperation der zweiten Isolierschicht (52) nicht nur die beiden anderen Innenkontaktstellen (43, 45) freilegt, sondern auch die Querteilstücke (A, B, C, D, E) des Magnetowiderstandselements (50), so daß man bei der Abscheidungsoperation der leitenden Schicht Querleiter (81, 82, 83, 84) auf den Querteilstücken (A, B, C, D) des Magnetowiderstandselements (50) bildet.

12. Verfahren nach Anspruch 9, dadurch gekennzeichnet, daß man vorher eine Teileinheit bildet, ausgehend von einem Substrat (10), auf dem man einen Polschuh (14) bildet, mit zwei Pfeilern (16₁, 16₂) und einer leitenden Spule (18), eingebettet in ein Isoliermaterial (20), wobei diese Teileinheit als Substrat für die nachfolgenden Operationen dient und dieses Verfahren zu einem Lese-Schreibkopf führt.

## Claims

1. Magnetic reading head comprising a magnetic circuit having two pole pieces (90₁, 90₂) separated by a first head gap (100) and a longitudinal magneto resistant element (50), said head being characterized in that it also comprises two magnetic layers (30₁, 30₂) in contact with the pole pieces (90₁, 90₂) and spaced from one another by a second head gap (32) located beneath the first (100), said magnetic layers (30₁, 30₂) having a width which decreases on approaching the second head gap (32) and thus forming a magnetic field concentrator, the longitudinal magnetoresistant element (50) being placed across said second head gap (32) and being made from a multilayer material constituted by a stack of magnetic layers separated by nonmagnetic metal layers.

2. Magnetic read head according to claim 1, characterized in that the magnetoresistant element (50) is bent on itself and formed from several parallel, longitudinal portions (a, b, c, d, e), arranged in juxtaposed manner across the second head gap (32) and transverse portions (A, B, C, D).

3. Magnetic head according to claim 2, characterized in that the transverse portions (A, B, C, D) are shortcircuited by conductors (81, 82, 83, 84).

4. Magnetic head according to claim 1, characterized in that it also comprises an electrical conductor (80) able to longitudinally polarize the magnetoresistant element (50).

5. Magnetic read head according to claim 4, characterized in that the material of the polarization conductor (80) is the same as the material of the conductors (81, 82, 83, 84) short-circuiting the longitudinal portions (a, b, c, d, e) of the magnetoresistant element (50).

6. Magnetic read head according to claim 1, characterized in that the magnetoresistant element (50) has two ends connected by two conductive strips (31, 37) to two external elements (21, 27).

7. Magnetic read head according to claim 4, characterized in that the electrical polarization conductor (80) has two ends connected by two conductive strips (33, 35) to two external elements (23, 25).

8. Magnetic head according to any one of the claims 1 to 7, characterized in that it also comprises a lower magnetic piece (14, 16₁, 16₂) magnetically coupled to the two pole pieces (90₁, 90₂) and a conductor coil (18) surrounding a portion (16₁, 16₂) of the magnetic circuit, so that the head operates both in reading and writing.

9. Process for producing a magnetic read head according to claim 1, characterized in that it comprises the following operations:
- on a substrate (20, 16₁, 16₂) is deposited a magnetic material layer, which is etched in order to form two layers (30₁, 30₂) spaced from one another by a head gap (32), said layers having a width decreasing on approaching the head gap (32),
- on the assembly is deposited a first insulating layer (34),
- a metal layer is deposited and etched in order to form four internal conductor elements (41, 43, 45, 47) connected by four conductive strips (31, 33, 35, 37) to four external elements (21, 23, 25, 27),
- a multilayer magnetoresistant material layer is deposited and said layer is etched in order to form a magnetoresistant element, said element having two ends in contact with two first internal elements (41, 47),
- a second insulating layer (52) is deposited,
- said second insulating layer (52) is etched in order to free two other internal elements (43, 45),
- a conductive layer is deposited and etched to leave a ribbon (80) having two ends (73, 75) in contact with the two other internal elements (43, 45), said ribbon (80) extending across the magnetoresistant element (50),
- on the assembly are formed two pole pieces (90₁, 90₂) bearing on the two magnetic layers (30₁, 30₂), said two pole pieces being separated by a head gap (100).

10. Process according to claim 9, characterized in that a magnetoresistant element is produced in the form of parallel, longitudinal portions (a, b, c, d, e), arranged in juxtaposed manner across the head gap (32) separating the two magnetic layers (30₁, 30₂) and transverse portions (A, B, C, D) connecting the ends of the longitudinal portions.

11. Process according to claim 10, characterized in that, in the operation of etching the second insulating layer (52), not only are the two other internal elements (43, 45) freed, but also the transverse portions (A, B, C, D) of the magnetoresistant element (50), so that in the operation of depositing the conductive layer, formation takes place of transverse conductors (81, 82, 83, 84) on the transverse portions (A, B, C, D) of the magnetoresistant element (50).

12. Process according to claim 9, characterized in that beforehand is formed a subassembly starting with a substrate (10), on which is formed a pole piece (14) with two pillars (16₁, 16₂) and a conductor coil (18) embedded in an insulant (20), said subassembly serving as a substrate for the following operations, said process leading to a read and write head.
